# EUROPÄISCHE PATENTANMELDUNG

(11) **EP 1 281 425 A1**
(43) Veröffentlichungstag der Anmeldung: **05.02.2003**
(21) Anmeldenummer: 02017284.7
(22) Anmeldetag: 01.08.2002
(51) Int. Cl.: B01D 27/08

(54) **Kraftstofffilter für Dieselkraftstoff**

(30) Priorität: 03.08.2001 DE 10138122
(71) Anmelder: ROBERT BOSCH GMBH, 70442 Stuttgart (DE)
(72) Erfinder: Sancho, Manuel, 37007 Salamanca (ES); De La Azuela, Julian, 28006 Madrid (ES)

(57) **Zusammenfassung**

Es wird ein Kraftstofffilter für Dieselkraftstoff vorgeschlagen, das als Boxfilter (10) mit einem Gehäuse (19) aus Kunststoff ausgebildet ist. Das Gehäuse (19) besteht aus einem ein Filterelement (22) aufnehmenden, becherförmigen Oberteil (21) und aus einem topfförmigen, einen Wasserspeicherraum (23) aufnehmenden Unterteil (24), die beide an ihren freien Rändern (25), (26) dicht und fest miteinander verschweißt sind, wobei im Bereich eines Bodenteils (28) des becherförmigen Oberteils (21) die Öffnungen (29), (31) für Einlaß und Auslaß, Dichtungsmittel (46), (47) sowie Befestigungsmittel ((45) liegen. Das relativ einfach und kostengünstig bauende Boxfilter ist besonders rückstandsarm thermisch entsorgbar.

## Beschreibung

### Stand der Technik

Die Erfindung geht aus von einem Kraftstofffilter für Dieselkraftstoff in einer Ausbildung als Boxfilter nach der im Oberbegriff des Anspruchs 1 näher angegebenen Gattung.

Es ist schon ein solches Kraftstofffilter für Dieselkraftstoff aus der DE 1 947 527 A1 bekannt, bei der das Filter nach Art eines Boxfilters ausgeführt ist, die auch als Wegwerfbox bezeichnet wird. Das mit einem Wasserspeicherraum ausgebildete Boxfilter hat ein Gehäuse, bei dem ein becherförmiges Unterteil oben an seinem offenen Rand durch einen Deckel unlösbar verschlossen ist, wobei der Deckel als relativ dickes, Kanäle aufweisendes Druckgußteil ausgeführt ist. Zudem ist ein im Inneren des Gehäuses angeordneter, blockförmiger Filtereinsatz dicht in dem Druckgußteil befestigt. Um hier das becherförmige Unterteil aus Kunststoff mit dem Deckel aus Metall unlösbar zu verbinden, ist ein metallischer, beide Gehäuseteile umfassender Spannring vorgesehen, dessen Ränder jeweils zusätzlich umgebördelt sind, wobei ein in die Trennebene eingelegter O-Ring für die Abdichtung sorgt. Obwohl sich das becherförmige Gehäuseteil aus Kunststoff relativ preiswert herstellen läßt, baut die Wegwerfbox mit Blockeinsatz insgesamt doch relativ aufwendig und läßt sich infolge des metallischen Deckels kaum rückstandsfrei entsorgen. Auch ist hier für die Befestigung des Boxfilters an einem zugeordneten Filterkopf ein zentrales Innengewinde im metallischen Deckel erforderlich.

Ferner ist aus der GB 2 199 893 A ebenfalls eine solche Wegwerfbox bekannt, die einen axial durchströmten Wickeleinsatz aufweist und in deren Wasserspeicherraum ein Wassersensor ragt. Auch hier ist das Boxfilter mit Hilfe eines zentralen, hohlen Gewindestutzens an einem zugeordneten Filterkopf festgeschraubt. Bei diesem Boxfilter besteht das Gehäuse ebenfalls aus einem becherförmigen Gehäuseteil und einem damit verbördelten Deckel, die beide aus Metall bestehen, so daß im Betrieb die gesamte Box ausgetauscht werden muß. Das Boxfilter baut in Folge seines metallischen Gehäuses relativ aufwendig und teuer und ist zudem schlecht entsorgbar.

Aus der EP 0 819 458 A1 ist es ferner bekannt,bei einem Gehäusefilter das gesamte Gehäuse aus Kunststoff herzustellen, wobei in einen die Anschlüsse für Zulauf und Ablauf des Dieselkraftstoffes aufweisenden Filterkopf ein becherförmiges Gehäuseteil einschraubbar ist, so daß das ringförmig ausgebildete Filterelement im Innneren des Gehäuses aus Kunststoff für sich allein austauschbar und leicht entsorgbar ist. Damit läßt sich jedoch keine Wegwerfbox aufbauen, wie sie in vielen Anwendungsfällen erwünscht ist.

### Vorteile der Erfindung

Das erfindungsgemäße Kraftstofffilter für Dieselkraftstoff in einer Ausbildung als Boxfilter mit den kennzeichnenden Merkmalen des Hauptanspruchs hat demgegenüber den Vorteil, daß mit ihm ein äußerst einfach und kostengünstig bauendes Boxfilter erreichbar ist, das sich für eine rationelle Massenfabrikation eignet und das gut entsorgbar ist. Durch die Ausbildung des gesamten Gehäuses aus Kunststoff kann die Wegwerfbox als Ganzes verbrannt und somit thermisch entsorgt werden, so daß der verbleibende Rückstand möglichst gering ist. Durch die Ausbildung des Gehäuses aus Kunststoff ergibt sich zudem eine leichte Bauweise des Boxfilters; auch läßt sich das Boxfilter leicht an verschiedene Zusatzfunktionen anpassen.

Durch die in den Unteransprüchen aufgeführten Maßnahmen sind vorteilhafte Weiterbildungen und Verbesserungen des im Hauptanspruch angegebenen Kraftstofffilters für Dieselkraftstoff möglich. Besonders vorteilhaft ist eine Bauweise nach Anspruch 2, wodurch sich das Boxfilter besonders zweckmäßig und leicht herstellen läßt; auf diese Weise ist das Filterelement nach seinem Einbau in das becherförmige Gehäuseteil weitgehend gegen Beschädigungen von außen geschützt. Für eine einfache Montage des Boxfilters können beide Gehäuseteile ineinander gesteckt und bis zum Anschlag des topfförmigen Unterteils am Filterelement zusammengefügt werden, wonach dann die Gehäuseteile so verschweißt werden, daß eine dichte, feste und unlösbare Verbindung entsteht. Diese dichte, unlösbare Verbindung zwischen beiden Gehäuseteilen läßt sich in besonders vorteilhafter Weise gemäß den Ansprüchen 3 und 4 durchführen, wodurch in günstiger Weise eine leicht beherrschbare und sichere Herstellung möglich ist. Eine zweckmäßige Befestigung des Boxfilters an einem Filterkopf läßt sich erreichen, wenn das Boxfilter gemäß Anspruch 5 mit einem Außengewinde ausgeführt wird. Dadurch läßt sich bei leichter Bauweise eine relativ stabile Befestigung erreichen. Zudem ermöglicht diese Befestigungsart eine leichte Montage und Demontage des Boxfilters an einem Filterkopf. Günstig ist ferner eine Ausführung nach Anspruch 6, wodurch eine einfache, sichere und kostengünstige Abdichtung des Boxfilters nach außen und nach innen erreichbar ist. Gemäß den Ansprüchen 7 und 8 läßt sich das Boxfilter ohne großen Mehraufwand für zusätzliche Funktionen ausrüsten, wobei diese Funktionen besonders leicht in dem aus Kunststoff bestehenden Unterteil integrierbar sind. Weitere vorteilhafte Ausgestaltungen ergeben sich aus den übrigen Ansprüchen der Beschreibung sowie der Zeichnung.

### Zeichnung

Ein Ausführungsbeispiel der Erfindung ist in der Zeichnung dargestellt und in der nachfolgenden Beschreibung näher erläutert.

Es zeigen:
Figur 1 in stark vereinfachter Darstellung einen Längsschnitt durch ein Kraftstofffilter für Dieselkraftstoff in einer Ausbildung als Boxfilter, eingeschraubt in einen zugeordneten Filterkopf und
Figur 2 eine Draufsicht auf das Kraftstofffilter nach Figur 1.

### Beschreibung des Ausführungsbeispiels

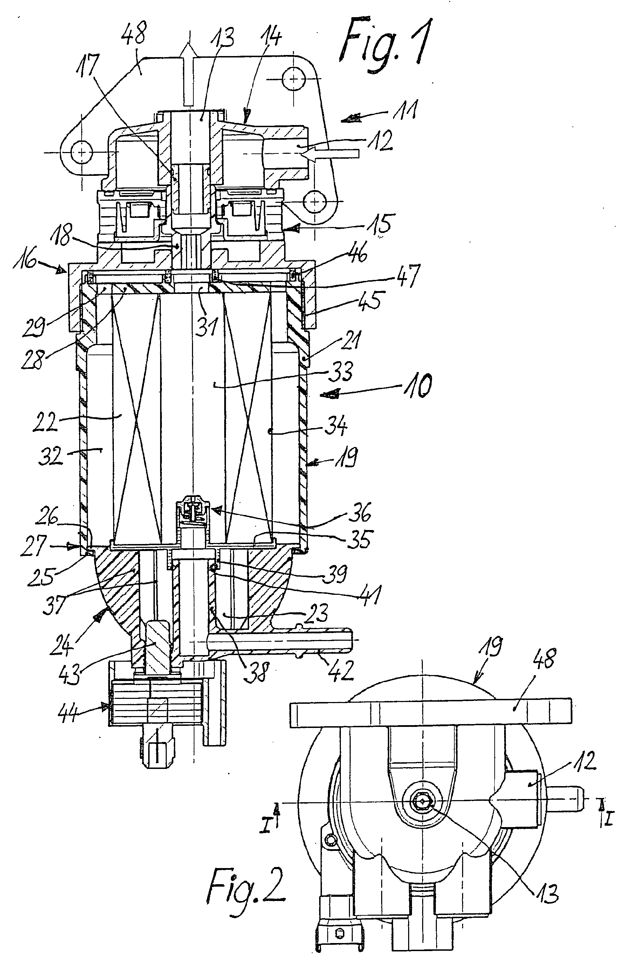

Die Figur 1 zeigt in stark vereinfachter Form einen Längsschnitt durch ein Kraftstofffilter für Dieselkraftstoff in einer Ausbildung als Boxfilter 10, das an einem zugeordneten Filterkopf 11 befestigt ist. Der mehrgliedrig und scheibenförmig aufgebaute Filterkopf 11 weist einen, die Anschlüsse für Zulauf 12 und Ablauf 13 aufweisenden Deckelmodul 14, einen Vorwärmmodul 15 und einen Aufnahmemodul 16 auf, die alle durch eine zentrale Verschraubung aus Gewindehülse 17 und Hohlschraube 18 zusammengehalten werden. Während der das Boxfilter 10 aufnehmende Modul 16 und der Deckelmodul 14 aus Metall (Aluminium) bestehen, hat der Vorwärmmodul 15 ein Gehäuse aus Kunststoff. Im übrigen wird auf die weitere Bauart des Filterkopfes 11 nicht eingegangen, da sie im vorliegenden Zusammenhang nicht näher interessiert.

Das in den Aufnahmemodul 16 eingeschraubte Boxfilter 10 hat ein im wesentlichen zylindrisches, geschlossenes Gehäuse 19, das aus einem becherförmigen, ein Filterelement 22 aufnehmenden Oberteil 21 sowie einem einen Wasserspeicherraum 23 aufnehmenden, topfförmigen Unterteil 24 besteht. Das becherförmige Oberteil 21 und das topfförmige Unterteil 24, die beide aus Kunststoff bestehen, sind so ausgebildet und zueinander angeordnet, daß sie mit ihren freien Rändern 25 bzw.26 in einer Trennebene 27 ineinander greifen und unlösbar so miteinander verbunden sind, daß eine dichte, feste Verbindung entsteht. Auf diese Weise ist das becherförmige Oberteil 21 im Gehäuse 19 so angeordnet, daß sein ebenes Bodenteil 28 die obere Stirnseite des Boxfilters 11 bildet und längs des Umfangs verteilte, erste Öffnungen 29 für den Einlaß sowie eine zentrale, zweite Öffnung 31 für den Auslaß aufweist. Während die ersten Öffnungen 29 im Innenraum des Gehäuses 19 mit der Schmutzseite 32 verbunden sind, ist die zentrale, zweite Öffnung 31 mit der Reinseite 33 im Filtereinsatz 22 verbunden. Das Filterelement 22 ist hier als ringförmig angeordneter Sterneinsatz 34 ausgeführt, der in radialer Richtung von außen nach innen durchströmt wird und der an seiner oberen Stirnseite im Bodenteil 28 eingegossen und abgedichtet ist. An seiner unteren Stirnseite ist der Sterneinsatz 34 durch eine Endscheibe 35 abgedichtet, in der zentral ein Überströmventil 36 angeordnet ist.

Das topfförmige Unterteil 24 weist mehrere, längs des Umfangs verteilte, axial verlaufende und sternförmig angeordnete Stege 37 auf, auf denen sich das Filterlement 22 mit seiner Endscheibe 35 abstützt. Ferner ist in dem topfförmigen Unterteil 24 koaxial zur Längsachse des Boxfilters 10 ein Rohrstutzen 38 angeordnet, der in einen koaxialen Auslaßstutzen 39 des Überströmventils 36 am Filterelement 22 ragt. Zur Abdichtung zwischen den beiden, ineinander greifenden Stutzen 38, 39 ist ein O-Ring 41 vorgesehen. Von dem axial verlaufenden Rohrstutzen 38 führt im Unterteil 24 radial ein Ablaufstutzen 42 nach außen, über den die Überströmmenge abfließen kann. Seitlich neben dem Rohrstutzen 38 ist in dem Unterteil 24 eine Wasserablaufschraube 43 angeordnet, in der zusätzlich ein Wassersensor 44 integriert ist.

Wie die Figur 1 ferner zeigt, ist das Boxfilter 10 in den Filterkopf 11 eingeschraubt, wozu das becherförmige Oberteil 21 ausgehend von dem Bodenteil 28 an seiner zylindrischen Mantelfläche ein Außengewinde 45 aufweist, das in ein entsprechendes Innengewinde des Aufnahmemoduls 16 greift. Zur Abdichtung zwischen Boxfilter 10 und Filterkopf 11 sowie nach außen hin, sind am ebenen Bodenteil 28 zwei Dichtringe angeordnet, von denen der äußere Dichtring 46 die Abdichtung der Schmutzseite 32 nach außen hin übernimmt, während der innere Dichtring 47 die zweite Öffnung 31 umfaßt, und somit die Reinseite 33 gegenüber der Schmutzseite 32 abdichtet. Beide Dichtringe 46, 47 können dabei vorteilhaft als O-Ringe ausgeführt werden.

Bei der Herstellung des Boxfilters 10 wird in zweckmäßiger Weise so vorgegangen, daß das Filterelement 22 zuerst in das becherförmige Oberteil 21 bei noch nicht umgebördelten Rand eingebaut wird. Dabei ist die axiale Länge des Filterelements 22 so gewählt, daß seine Endscheibe 35 vom freien, noch nicht umgebördelten Rand 25 des Oberteils 21 geringfügig überragt wird. Anschließend wird das topfförmige Unterteil 24 in das Oberteil 21 eingeführt, bis es mit seinen Stegen 37 an der Endscheibe 35 anschlägt, wobei sein freier Rand 26 den Rand 25 des Oberteils 21 übergreift. Anschließend werden in zweckmäßiger Weise die beiden Ränder 25, 26 verschweißt, was vorzugsweise mit Ultraschall geschehen kann, und anschließend zusätzlich der Rand 25 des Oberteils 21 umgebördelt, so daß eine besonders feste, dichte und unlösbare Verbindung in der Trennebene 27 entsteht. Beim Zusammfügen von Oberteil und Unterteil greifen der Auslaßstutzen 39 des Überstömventils 36 und der Rohrstutzen 38 automatisch ineinander, wobei der O-Ring 41 die Abdichtung übernimmt und den Ablaufstutzen 42 vom Wasserspeicherraum 23 trennt.

Durch die Ausbildung und Anordnung der Dichtringe 46, 47 an dem ebenen Bodenteil 28 in Verbindung mit dem Außengewinde 45 läßt sich das Boxfilter 10 in sicherer und einfacher Weise am Filterkopf 11 montieren und lösen, wobei sich eine einwandfreie Abdichtung zwischen Schmutz- und Reinseite bzw. nach außen hin erreichen läßt.

Die Wirkungsweise des Boxfilters 10 ist an sich bekannt, so daß darauf nur kurz eingegangen wird. Der am Zulauf 12 zugeführte Dieselkraftstoff durchströmt den Vorwärmmodul 15 und danach nicht näher gezeigt axiale Öffnungen im Aufnahmemodul 16 und gelangt anschließend über die ersten Öffnungen 29 auf die Schmutzseite 32 im Inneren des Gehäuses 19. Der Kraftstoff durchströmt radial von außen nach innen das Filterelement 22 und gelangt von der Reinseite 33 über die zweite Öffnung 31 im Bodenteil 28, die Hohlschraube 18 und die Gewindehülse 17 zum Ablauf 13. Auf der Schmutzseite 32 sich dabei abscheidendes Wasser sinkt nach unten und sammelt sich im Wasserspeicherraum 23, wo es vom Wassersensor 24 sensiert wird und bei Bedarf über die Wasserablaufschraube 43 abgelassen werden kann. Bei zu hohem Druck auf der Reinseite 33 kann das Überströmventil 36 ansprechen und Druckmittel von der Reinseite 33 zum Ablaufstutzen 42 abströmen lassen. Wenn das Filterelement 22 im Betrieb verschmutzt ist und ausgetauscht werden soll, so wird das gesamte Boxfilter 10 aus dem Filterkopf 11 ausgeschraubt und entsorgt. Da hierbei das gesamte Gehäuse 19 aus Kunststoff besteht, läßt sich das Boxfilter 10 besonders gut verbrennen, so daß nur relativ wenig Rückstände verbleiben.

Wie die Figur 1 in Verbindung mit Figur 2 näher zeigt, weist das Gehäuse 19 im wesentlichen einen zylindrischen Querschnitt auf. Zudem ist am Deckelmodul 14 ein Befestigungsflansch 48 angeordnet, mit dem der Filterkopf 11 an einem Maschinenteil befestigt werden kann.

Selbstverständlich sind an der gezeigten Ausführungsform Änderungen möglich, ohne vom Gedanken der Erfindung abzuweichen. So kann anstelle des Filterelements 22 mit radial durchströmtem Sterneinsatz auch eine andere Bauart eines Filterelements verwendet werden. Anstelle der gezeigten Gewindeverbindung 45 kann auch eine andere Drehverbindung wie z.B. ein Bajonett-Verschluß oder ein Schnellverschluß verwendet werden. Auch könnte die Endscheibe 35 über die Trennebene 27 hinaus in das topfförmige Unterteil 24 hineinverlegt werden, ohne vom Gedanken der Erfindung abzuweichen.

## Patentansprüche

1. Kraftstofffilter für Dieselkraftstoff in einer Ausbildung als Boxfilter, mit einem im wesentlichen zylindrischen, geschlossenen Gehäuse, an dessen einer Stirnseite Öffnungen für einen Einlaß und einen Auslaß sowie Befestigungsmittel und Dichtungsmittel zum Befestigen des Boxfilters an einem zugeordneten Filterkopf angeordnet sind und bei dem das Gehäuse aus zwei unlösbar miteinander verbundenen Gehäuseteilen besteht, von denen mindestens eines aus Kunststoff besteht und bei dem das Gehäuse einen Innenraum einschließt, in den ein Filterelement zwischen eine mit der ersten Öffnung verbundene Schmutzseite und eine mit der zweiten Öffnung verbundene Reinseite geschaltet ist, wobei im Innenraum unterhalb des Filterelements ein Wasserspeicherraum ausgebildet ist, der über eine Wasserablaufschraube entleerbar ist, **dadurch gekennzeichnet, daß** das Gehäuse (19) aus einem im wesentlichen becherförmigen, das Filterelement (22) aufnehmenden Oberteil (21) und einem topfförmigen, den Wasserspeicherraum (23) aufnehmenden Unterteil (24) besteht, die jeweils an ihren freien Rändern (25, 26) in unlösbarer Form dicht und fest miteinander verbunden sind, wobei ein im becherförmigen Oberteil (21) liegendes Bodenteil (28) die Öffnungen (29, 31) für Einlaß und Auslaß aufweist, daß beide Gehäuseteile (21, 24) aus Kunststoff bestehen und daß das Filterelement (22) mit seinem unteren Ende am Unterteil (24) des Gehäuses (19) anliegt.

2. Kraftstofffilter nach Anspruch 1, **dadurch gekennzeichnet, daß** sich das Filterelement (22) im wesentlichen in einer, durch die Verbindungsstelle (25, 26) der beiden Gehäuseteile (21, 24) verlaufenden Trennebene (27) am Unterteil (24) abstützt.

3. Kraftstofffilter nach Anspruch 1 oder 2, **dadurch gekennzeichnet, daß** die beiden Gehäuseteile (21, 24) an ihren Rändern (25, 26) miteinander verschweißt sind, insbesondere durch Ultraschall.

4. Kraftstofffilter nach Anspruch 3, **dadurch gekennzeichnet, daß** die beiden Gehäuseteile (21, 24) an ihren Rändern (25, 26) miteinander verbördelt sind.

5. Kraftstofffilter nach einem der Ansprüche 1 bis 4, **dadurch gekennzeichnet, daß** die Befestigungsmittel am Oberteil (21) des Gehäuses (19) an dessen Außendurchmesser angeordnet und insbesondere als Gewinde (45) oder als Teil eines Schnellverschlusses ausgebildet sind.

6. Kraftstofffilter nach einem der Ansprüche 1 bis 5, **dadurch gekennzeichnet, daß** als Dichtungsmittel zum Abdichten zwischen dem Boxfilter (10) und dem zugeordneten Filterkopf (11) zwei ringförmig angeordnete Dichtringe (46, 47) an der Stirnseite des Oberteils (21) angeordnet sind.

7. Kraftstofffilter nach einem der Ansprüche 1 bis 6, **dadurch gekennzeichnet, daß** am Unterteil (24) ein Ablaufanschluß (42) für eine Überströmmenge angeordnet ist.

8. Kraftstofffilter nach einem der Ansprüche 1 bis 7, **dadurch gekennzeichnet, daß** am Unterteil (24) ein Wassersensor (44) angeordnet ist, der insbesondere in die Wasserablaufschraube (43) integriert ist.

9. Kraftstofffilter nach einem der Ansprüche 1 bis 8, **dadurch gekennzeichnet, daß** das Filterelement (22) einen radial von außen nach innen durchströmten, ringförmig angeordneten Sterneinsatz (34) aufweist, der an seinem unteren stirnseitigen Ende durch eine Endscheibe (35) abgedichtet ist.

10. Kraftstofffilter nach Anspruch 9, **dadurch gekennzeichnet, daß** das Filterelement (22) ein zentral in der Endscheibe (35) angeordnetes Überströmventil (36) aufweist, dessen Auslaßstutzen (39) am Filterelement (22) auf einen axialen, mit dem Ablaufstutzen (42) verbundenen Rohrstutzen (38) im Unterteil (24) aufsteckbar ist, wobei ein O-Ring (41) die Abdichtung übernimmt.

11. Kraftstofffilter nach einem der Ansprüche 5 bis 10, **dadurch gekennzeichnet, daß** das becherförmige Oberteil (21) des Gehäuses (19) ein ebenes Bodenteil (28) aufweist, in dem die Öffnungen (29, 31) für Einlaß und Auslaß und an dem außen die Dichtringe (46, 47) angeordnet sind, während das, die Befestigungsmittel bildende Gewinde (45) oder Schnellverschlußelemente etwa in Höhe des Bodenteils (28) an der zylindrischen Mantelfläche des becherförmigen Oberteils (21) angeordnet sind.
